# EUROPEAN PATENT APPLICATION

(11) **EP 1 460 572 A2**
(43) Date of publication of application: **22.09.2004**
(21) Application number: 04005844.8
(22) Date of filing: 11.03.2004
(51) Int. Cl.: G06F 17/60

(54) **Parameterized and reusable implementations of business logic patterns**

(30) Priority: 12.03.2003 US 389685
(71) Applicant: MICROSOFT CORPORATION, Redmond, WA 98052 (US)
(72) Inventor: Riddersholm Petersen, Michael, DK-3500 Vaerlose (DK); Hammer, Lars, DK-2000 Fredriksberg (DK); Kierulff, Hans c/c Microsoft Corporation,, Washington 98052-6399 (US); Hruby, Pavel, 2850 Naerum (DK); Kirkby, Phillip, DK-1620 Copenhagen (DK)
(74) Representative: Grünecker, Kinkeldey, Stockmair & Schwanhäusser Anwaltssozietät

(57) **Abstract**

The present invention provides flexible implementation of business logic in a business application. General and reusable business logic is implemented such that customized solutions for business applications are easier to develop. Binding properties in business entities to various logic implementations is utilized to reuse the business logic. Parameters can be set up in metadata that control the behavior of the business logic implementations.

## Description

### BACKGROUND OF THE INVENTION

The present invention relates to a computing environment in which source code is used to implement applications and programs desired by a user. More specifically, the present invention relates to a framework which enables flexible implementation of logic in the applications or computer programs.

Businesses have typically used a variety of mechanisms to control and analyze business operations such as accounting, payroll, human resources, sales orders, employee tracking, customer relations tracking, etc. Tools which provide these functions are often implemented using computer software. A software package may provide a user interface in order for a user to easily enter and view data corresponding to the various business operations. The software package is also configured to access and update the data, which is stored in a database.

Business applications are designed to handle various business events, such as order fulfillment and shipment. The business applications include application features that are implemented using code. In addition to code, business applications include a number of abstractions to interact with the code when executing the business applications. For example, one abstraction is a business entity that models storing data pertaining to a customer or sales order. These entities (or objects) contain classes for storing data.

Although classes are very useful in storing information, their function is limited. In some instances, the same or similar code is implemented in multiple places within an application to perform various operations on the classes. These multiple implementations are prone to errors and cost a significant amount of time and money to develop. Additionally, some of the implementations are not easily adapted to other situations, which makes it difficult to achieve economies of scale and acceptable product support for these implementations. As a result, a flexible application of business logic that is adaptable in different situations is desired in order to reduce the burden on business application developers.

### SUMMARY OF THE INVENTION

The present invention provides flexible implementation of business logic in a business application. General and reusable business logic is implemented such that customized solutions for business applications are easier to develop. Binding properties in business entities to various logic implementations is utilized to reuse the business logic. Parameters may be set up in metadata that control the behavior of business logic implementations referred to as collaborations and collaboration roles.

### BRIEF DESCRIPTION OF THE DRAWINGS

FIG. 1 is a block diagram of one environment in which the present invention can be used.
FIG. 2 is a block diagram of an object-relational (or entity-relational) database system.
FIG. 3 is a UML class diagram of a collaboration framework in accordance with one embodiment of the present invention.
FIG. 4 is a schematic diagram of various tasks to implement business collaborations.
FIG. 5 is a flow diagram of a task for defining a collaboration.
FIG. 6 is a flow diagram for defining a role as a field.
FIG. 7 is a flow diagram of a task for defining a role on a field.
FIG. 8 is a flow diagram of a task for defining a role on a collaboration.
FIG. 9 is a flow diagram of a task for defining a role as a visible interface.
FIG. 10 is a schematic diagram of a collaboration and associated table of roles.
FIG. 11 is a schematic diagram of implementation of a collaboration.
FIG. 12 is a flow diagram of a method for updating a field of a business entity using a collaboration.
FIG. 13 is a schematic diagram of an environment wherein a collaboration is associated with multiple entities.
FIG. 14 is a schematic diagram of an environment wherein collaborations interact with other collaborations.

### DETAILED DESCRIPTION OF ILLUSTRATIVE EMBODIMENTS

The present invention relates to implementation of business logic in computer software. Although herein described with reference to implementation of business logic across business objects, the present invention may also be applied to other types of logic that crosscuts several properties on objects in general. However, prior to discussing the present invention in greater detail, one embodiment of an illustrative environment in which the present invention can be used will be discussed.

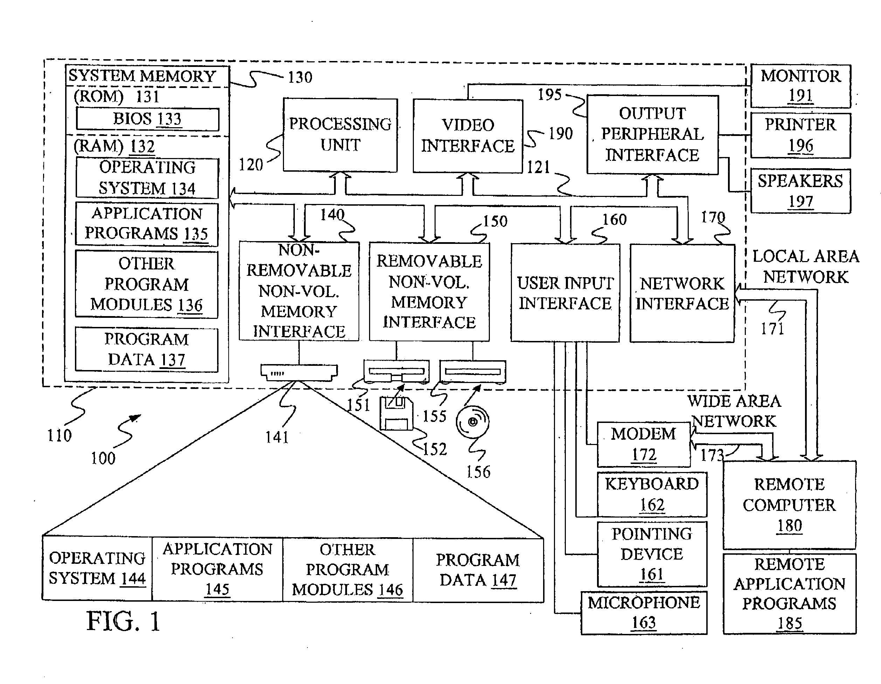

FIG. 1 illustrates an example of a suitable computing system environment 100 on which the invention may be implemented. The computing system environment 100 is only one example of a suitable computing environment and is not intended to suggest any limitation as to the scope of use or functionality of the invention. Neither should the computing environment 100 be interpreted as having any dependency or requirement relating to any one or combination of components illustrated in the exemplary operating environment 100.

The invention is operational with numerous other general purpose or special purpose computing system environments or configurations. Examples of well known computing systems, environments, and/or configurations that may be suitable for use with the invention include, but are not limited to, personal computers, server computers, hand-held or laptop devices, multiprocessor systems, microprocessor-based systems, set top boxes, programmable consumer electronics, network PCs, minicomputers, mainframe computers, distributed computing environments that include any of the above systems or devices, and the like.

The invention may be described in the general context of computer-executable instructions, such as program modules, being executed by a computer. Generally, program modules include routines, programs, objects, components, data structures, etc. that perform particular tasks or implement particular abstract data types. The invention may also be practiced in distributed computing environments where tasks are performed by remote processing devices that are linked through a communications network. In a distributed computing environment, program modules may be located in both local and remote computer storage media including memory storage devices.

With reference to FIG. 1, an exemplary system for implementing the invention includes a general purpose computing device in the form of a computer 110. Components of computer 110 may include, but are not limited to, a processing unit 120, a system memory 130, and a system bus 121 that couples various system components including the system memory to the processing unit 120. The system bus 121 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus.

Computer 110 typically includes a variety of computer readable media. Computer readable media can be any available media that can be accessed by computer 110 and includes both volatile and nonvolatile media, removable and non-removable media. By way of example, and not limitation, computer readable media may comprise computer storage media and communication media. Computer storage media includes both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 110. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer readable media.

The system memory 130 includes computer storage media in the form of volatile and/or nonvolatile memory such as read only memory (ROM) 131 and random access memory (RAM) 132. A basic input/output system 133 (BIOS), containing the basic routines that help to transfer information between elements within computer 110, such as during start-up, is typically stored in ROM 131. RAM 132 typically contains data and/or program modules that are immediately accessible to and/or presently being operated on by processing unit 120. By way of example, and not limitation, FIG. 1 illustrates operating system 134, application programs 135, other program modules 136, and program data 137.

The computer 110 may also include other removable/non-removable volatile/nonvolatile computer storage media. By way of example only, FIG. 1 illustrates a hard disk drive 141 that reads from or writes to non-removable, nonvolatile magnetic media, a magnetic disk drive 151 that reads from or writes to a removable, nonvolatile magnetic disk 152, and an optical disk drive 155 that reads from or writes to a removable, nonvolatile optical disk 156 such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 141 is typically connected to the system bus 121 through a non-removable memory interface such as interface 140, and magnetic disk drive 151 and optical disk drive 155 are typically connected to the system bus 121 by a removable memory interface, such as interface 150.

The drives and their associated computer storage media discussed above and illustrated in FIG. 1, provide storage of computer readable instructions, data structures, program modules and other data for the computer 110. In FIG. 1, for example, hard disk drive 141 is illustrated as storing operating system 144, application programs 145, other program modules 146, and program data 147. Note that these components can either be the same as or different from operating system 134, application programs 135, other program modules 136, and program data 137. Operating system 144, application programs 145, other program modules 146, and program data 147 are given different numbers here to illustrate that, at a minimum, they are different copies.

A user may enter commands and information into the computer 110 through input devices such as a keyboard 162, a microphone 163, and a pointing device 161, such as a mouse, trackball or touch pad. Other input devices (not shown) may include a joystick, game pad, satellite dish, scanner, or the like. These and other input devices are often connected to the processing unit 120 through a user input interface 160 that is coupled to the system bus, but may be connected by other interface and bus structures, such as a parallel port, game port or a universal serial bus (USB). A monitor 191 or other type of display device is also connected to the system bus 121 via an interface, such as a video interface 190. In addition to the monitor, computers may also include other peripheral output devices such as speakers 197 and printer 196, which may be connected through an output peripheral interface 195.

The computer 110 may operate in a networked environment using logical connections to one or more remote computers, such as a remote computer 180. The remote computer 180 may be a personal computer, a hand-held device, a server, a router, a network PC, a peer device or other common network node, and typically includes many or all of the elements described above relative to the computer 110. The logical connections depicted in FIG. 1 include a local area network (LAN) 171 and a wide area network (WAN) 173, but may also include other networks. Such networking environments are commonplace in offices, enterprise-wide computer networks, intranets and the Internet.

When used in a LAN networking environment, the computer 110 is connected to the LAN 171 through a network interface or adapter 170. When used in a WAN networking environment, the computer 110 typically includes a modem 172 or other means for establishing communications over the WAN 173, such as the Internet. The modem 172, which may be internal or external, may be connected to the system bus 121 via the user-input interface 160, or other appropriate mechanism. In a networked environment, program modules depicted relative to the computer 110, or portions thereof, may be stored in the remote memory storage device. By way of example, and not limitation, FIG. 1 illustrates remote application programs 185 as residing on remote computer 180. It will be appreciated that the network connections shown are exemplary and other means of establishing a communications link between the computers may be used.

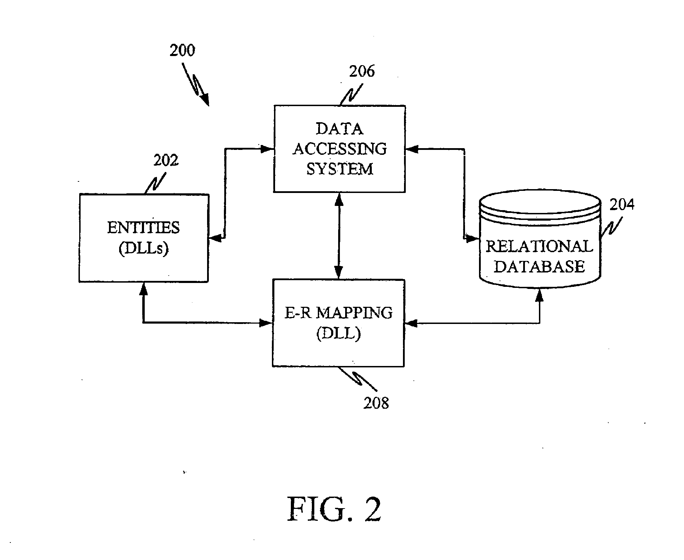

FIG. 2 is a block diagram of an object-relational (or entity-relational) data storage system. In the present discussion, entities will be referred to in a manner that is interchangeable with the term "objects". E-R system 200 includes a set of entities (or objects) 202 which correspond to data stored in a relational database 204. The entities access relational data through data accessing system 206 which utilizes entity-relational (ER) map 208. ER map 208 contains a mapping between the entities 202 and the table entries in relational database 204. It should be noted that the present invention can be used in other systems, other than E-R systems, and the system shown in FIG. 2 is but one example of a system in which the present invention can be used.

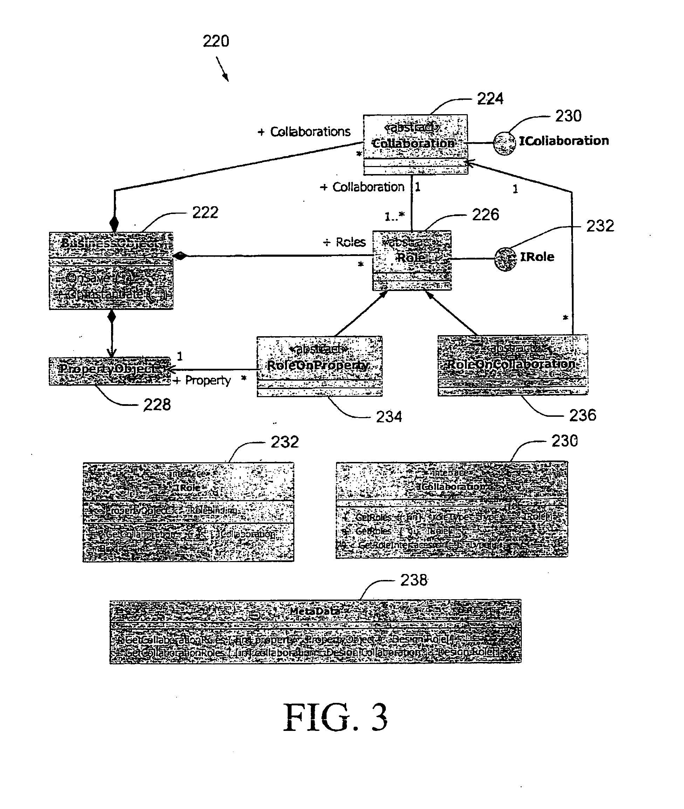

FIG. 3 is a unified modeling language (UML) class diagram of a business collaboration framework 220 in accordance with one embodiment of the present invention. Framework 220 includes one or more business objects 222. Business object 222 includes a static model that defines various data elements of the object 222. For example, a business object for a sales order may include various data elements such as a customer name, a shipping address, item description and price. In one embodiment, business object 222 is a base class that implements logic on behalf of other objects that derive from business object 222. Associated with business object 222 are one or more collaborations 224, one or more roles 226 and one or more properties 228.

Using framework 220, implementations of business logic patterns (herein collaborations and roles) are parameterized and reusable across different business objects. Parameterized refers to the ability to set up parameters in metadata that control the behavior of collaborations and collaboration roles. For instance, for a number sequence role, metadata can be used to define that any numbers drawn from the sequence should be consecutive. Each collaboration role may have a schema defining what metadata can be set on the collaboration/collaboration role. This metadata can be in addition to the metadata specifying the binding information between a propety and a collaboration role as discussed below.

Collaboration 224 is reusable by different business objects in a business application and allows a designer to set behavior of various properties (e.g., property 228) within the business object 222. Collaboration 224 includes business logic patterns, a set of roles (e.g., role 226), and rules that govern the cardinality (or number of elements in the set) of each role and how each role interacts with other roles in the same or different business entities. Collaboration 224 includes an associated interface 230 that defines the collaboration in the business application and allows interaction with other collaborations and roles.

Role 226 is an object that is associated with individual properties (e.g., fields or objects) within business object 222 and alternatively may be associated with multiple business objects. Role 226 contains business logic to interact with other collaborations and/or other roles to control behavior of properties that are bound to role 226. Additionally, role 226 includes external or internal fields. External fields are used when communicating with other roles or other business objects. In an external field, the role includes logic for controlling property interception and binding roles to data within the static model of business object 222, which is discussed below. Internal fields are used only within the particular role and are only accessed through the particular role. Role 226 also includes an associated interface 232 that defines the role.

Role 226 further may have an associated role-on property subclass 234 and/or an associated role-on collaboration subclass 236. Role-on property 234 is used for property interception on events that occur in the business application pertaining to properties (or fields) in the static model of business object 222. Role-on collaboration subclass 236 allows role 226 to interact with other collaborations, for example intercepting events from other collaborations.

Framework 220 also includes an associated metadata interface 238. The metadata interface 238 is used by framework 220 to interface with stored data given the behaviors defined by the roles. In particular, the interface 238 allows stored data to be bound to properties defined in the static model of business object 222 as defined by the roles. Upon definition of a collaboration, properties in the business object are bound to collaboration roles. This "binding information" is stored in a suitable metadata store.

Various events that occur within framework 220 cause the implementation of at least one collaboration and its associated role or roles. These events include creating, updating, reading and deleting of business entities as well as changing or otherwise altering properties within the business entity. For example, a simple number generator collaboration may be triggered (or instantiated) upon creation of a sales order to create a new sales order number in a sequence.

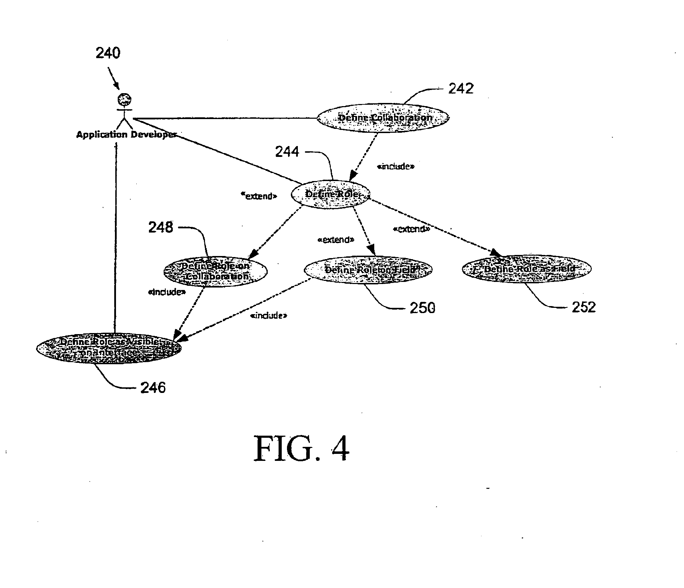

FIG. 4 illustrates a schematic diagram of exemplary tasks performed by an application developer 240 when developing an application with business collaborations. These tasks can be performed after a static model of properties in a business object has been defined. The tasks for application developer 240 to implement include a define collaboration task 242 and define role task 244. Define role task 244 includes using define role on collaboration task 248, define role on field task 250, define role as fields task 252 and define role as visible interface 246.

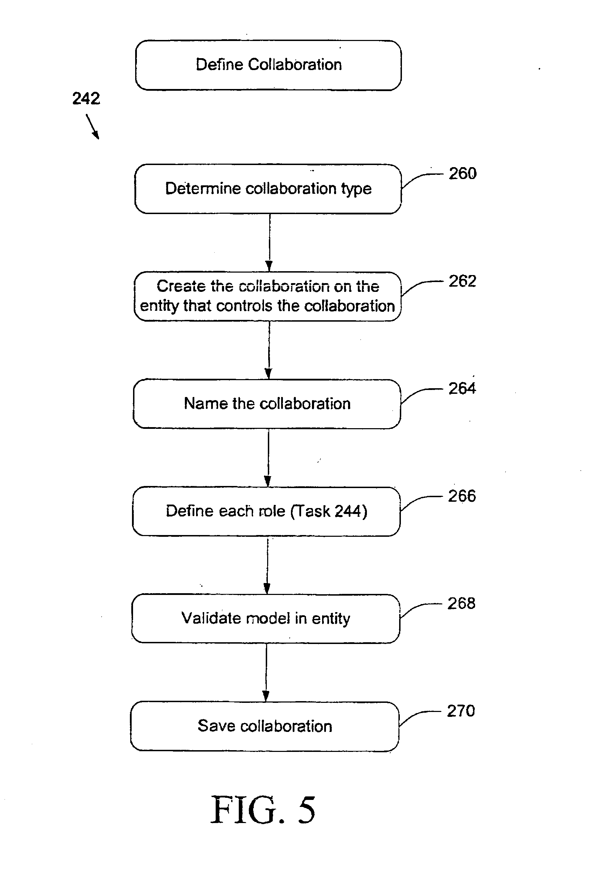

FIG. 5 illustrates steps for completing task 242 for defining a collaboration, which establishes metadata that binds the collaboration to a business entity. At step 260, the collaboration type is determined depending upon a business solution implement. For example, developer 240 may choose a money collaboration to convert an amount of money from one currency to another currency or choose an aggregate currency to calculate multiple instances of a field (i.e. adding prices across a collection of lines on a sales order). At step 262, the collaboration is created on the entity that controls the collaboration, that is, the collaboration is created in the metadata of the entity. For example, the collaboration is associated and created with respect to a particular business object. At step 264, the collaboration is named in order to properly identify the collaboration. After the collaboration has been named, the application developer may then define the roles for the collaboration at step 266. This step is performed by implementing task 244. The roles can later be used to bind objects in other entities to the roles. After each of the roles are defined, the model in the business entity is validated at step 268. Once the model has been validated using the collaboration, the collaboration is saved at step 270.

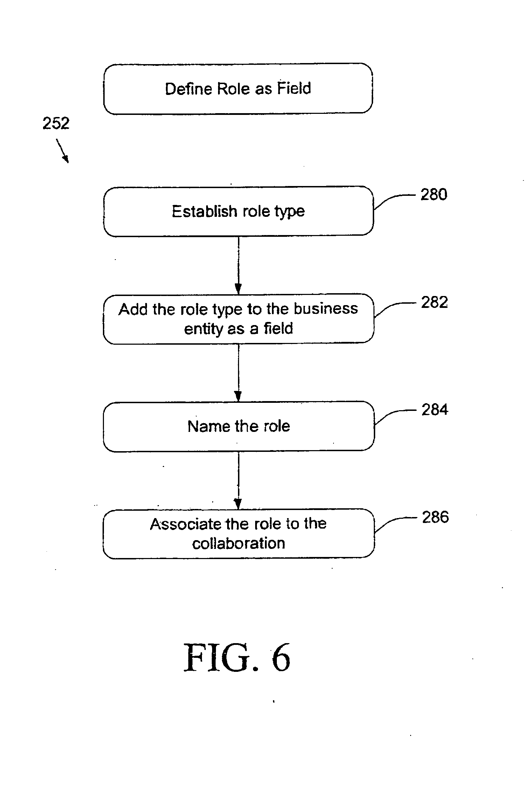

Roles can be defined using tasks 248, 250 and 252. FIG. 6 illustrates steps for completing task 252 of defining a role as a field. Task 252 is used to define a role that serves as a field in a business object. The task begins at step 280 where the role type is established. The role type may embody a date, integer, decimal, object, etc. or a user defined type. At step 282, the role type is added to the business entity as a field. Accordingly, the role is defined as a property object in the business entity. At step 284, the role is named in order to properly identify the role. Next, the role is associated with the proper collaboration at step 286.

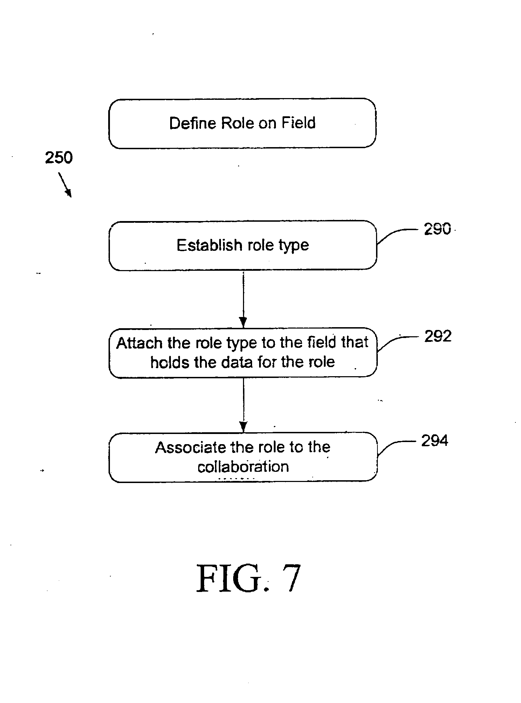

FIG. 7 illustrates steps for completing task 250 of defining a role on a field. Task 250 is used to define behaviors of fields present in a business object. At step 290, the role type is established. At step 292, the role type is attached to the field that holds the data for the role. Next, the role is associated with the collaboration at step 294.

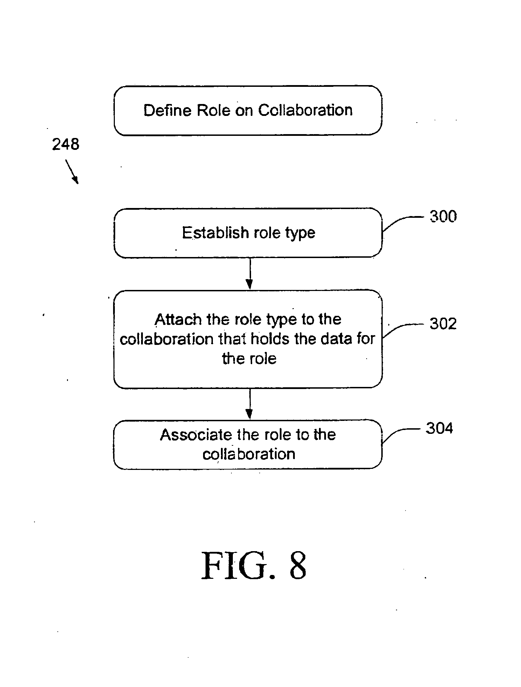

FIG. 8 illustrates steps for completing task 248 of defining a role on a collaboration. Task 248 is used to implement a role with reference to another collaboration. At step 300, the role type is established. At step 302, the role type is attached to the collaboration that holds the source for the role. At step 304, the role is associated with the collaboration.

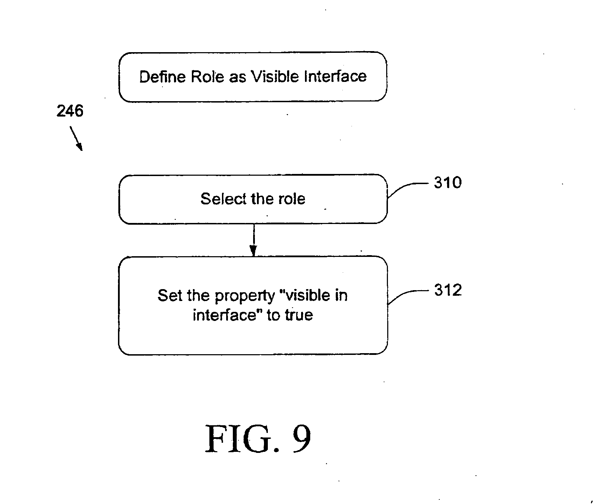

FIG. 9 illustrates task 246 of defining a role as a visible interface such that it may be accessed by code within a business application. Task 246 is a subtask of tasks 248 and 250. At step 310, a role to be made visible is selected. At step 312, a property visible flag is set to true in order to view the role.

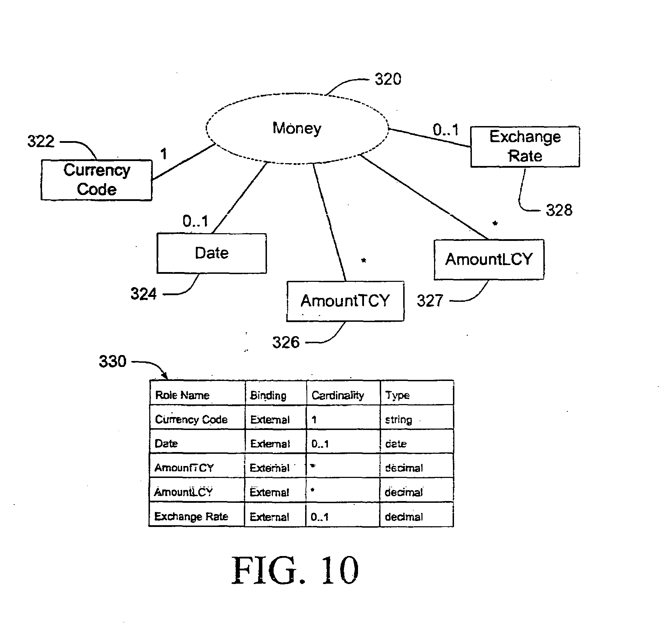

FIG. 10 illustrates an exemplary collaboration and an associated table of roles. Money collaboration 320 is used to convert monetary amounts between currencies. This collaboration is useful, for example, when updating an amount in a sales order, wherein the transaction currency is different from the local currency that is entered in accounting books. When a transaction currency is entered that is different from an accounting currency, the transaction currency amount is automatically converted and updates the accounting books with the accounting currency value. Money collaboration 320 includes a currency code role 322, a date role 324, an amount of transaction currency role 326, an amount of local (or accounting) currency role 327 and an exchange rate role 328. Money collaboration assumes a default currency (i.e., the accounting currency) for its implementation. It is worth noting that exchange rate role 328 need not be visible to an application developer and may also be included in the business logic of money collaboration 320 itself, without the need for a separate role.

Table 330 includes definitions for the roles in money collaboration 320. The rows of table 320 represent information pertaining to the roles and the columns represent information pertaining to particular aspects of the roles, namely role name, binding, cardinality and type. Currency code role 322 is an external field (thus its binding is external) and is a string. The cardinality of currency code role 322 is one, which means that there will always be one and only one currency code role for money collaboration 320. Date role 324 is an external field, is a date and has a cardinality of either 0 or 1 (denoted 0..1). AmountTCY role 326 and AmountLCY role 327 external fields, are decimals and can include any number of individual roles (denoted with a *). Exchange rate role 328 is an external field, is a decimal and has a cardinality of 0 or 1.

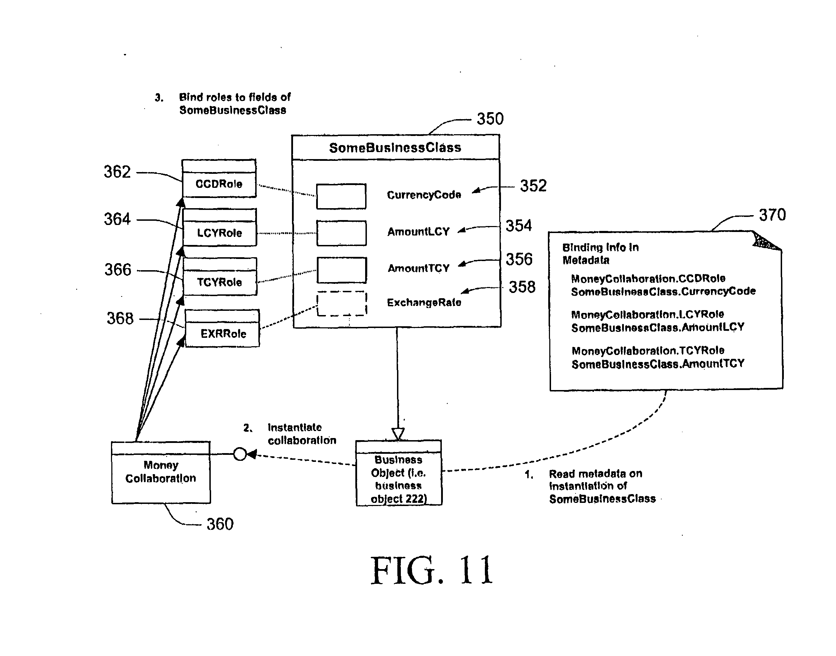

FIG. 11 illustrates an example implementation of converting monetary amounts between currencies. In this example, it is assumed that the local currency is known. A business entity denoted SomeBusinessClass 350 is defined in a business application. For example, SomeBusinessClass 350 could be a sales order that includes conversion between a transaction currency and a local currency. SomeBusinessClass 350 includes three fields, CurrencyCode transaction currency code 352, AmountLCY (amount in local (or accounting) currency) 354 and AmountTCY (amount in transaction currency) 356. If desired, class 350 could also include an ExchangeRate field 358.

Money collaboration 360 includes roles CCDRole 362, LCYRole 364, TCYRole 366 and EXRRole 368. Upon implementation of the collaboration 360, CCDRole 352 is bound to CurrencyCode field 352, LCYRole 364 is bound to AmountLCY field 354 and TCYRole 366 is bound to AmountTCY field 356. If ExchangeRate field 358 is used, EXRRole 368 is bound to it.

Metadata structure 370 includes binding information that binds the roles to respective fields. For example, the information MoneyCollaboration.CCDRole and SomeBusinessClass.CurrencyCode in structure 370 provides this binding. Upon instantiation of SomeBusinessClass (for example a new sales order is requested) the metadata is bound to the fields and the money collaboration 360 is instantiated.

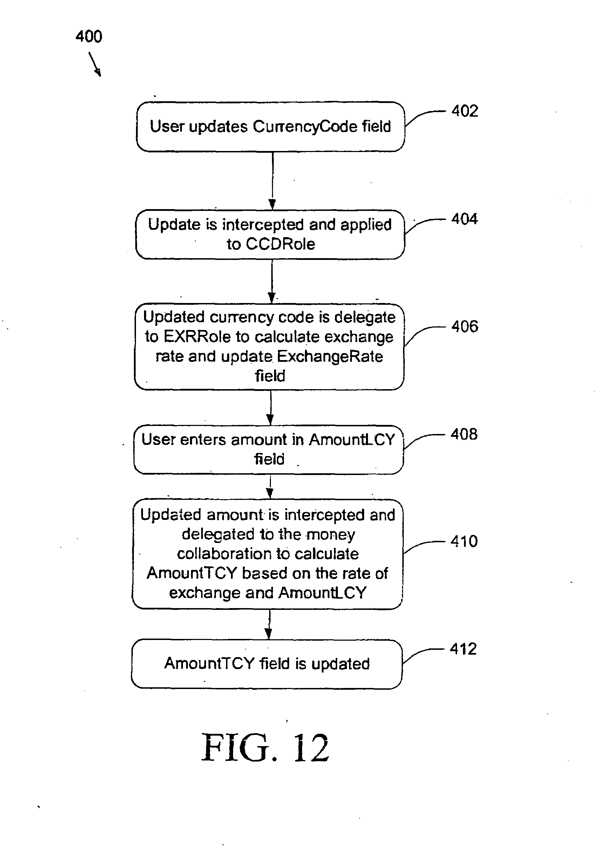

FIG. 12 is a method 400 of updating a transaction currency amount using money collaboration 360 according to one embodiment of the present invention. At step 402, a user updates the CurrencyCode field 352. At step 404, the update is intercepted and applied to CCDRole 362. The interception occurs whenever the field for currency code is updated. The updated currency code then is delegated to the EXRRole 368, where the rate of exchange is calculated and ExchangeRate field 358 may be updated at step 406.

Next, the user enters an amount in AmountLCY field 354 at step 408. Again, this updating causes an interception. At step 410, the new amount is updated and delegated to the money collaboration 360, where the new target currency value is calculated based on the rate of exchange and the amount of local currency. The AmountTCY field 356 is then updated at step 412.

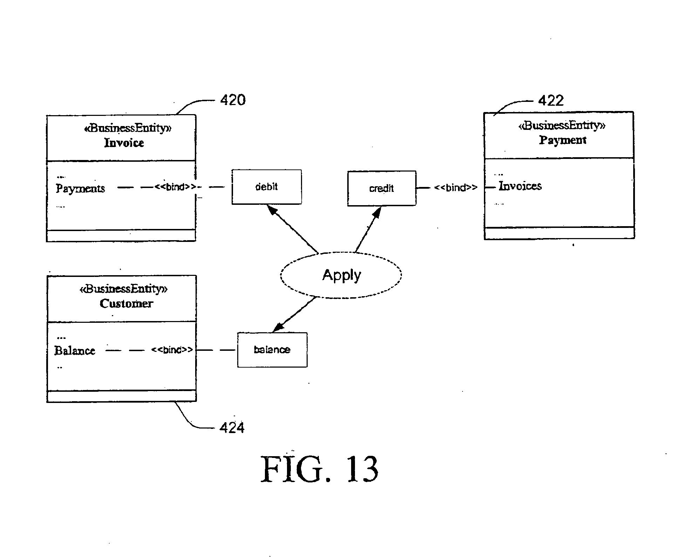

It should be noted that collaborations may be defined across several entities and collaborations may interact with other collaborations. FIG. 13 illustrates an exemplary environment wherein a collaboration is used across multiple entities. An invoice entity 420, a payment entity 422 and a customer entity 424 are illustrated. An Apply collaboration includes roles payments, invoices and balance. The invoice role includes information about payments in order to send an accurate invoice to a customer using the invoice entity. Likewise, the customer entity uses the balance role to figure out the invoices value and payment value of a customer to determine the appropriate balance.

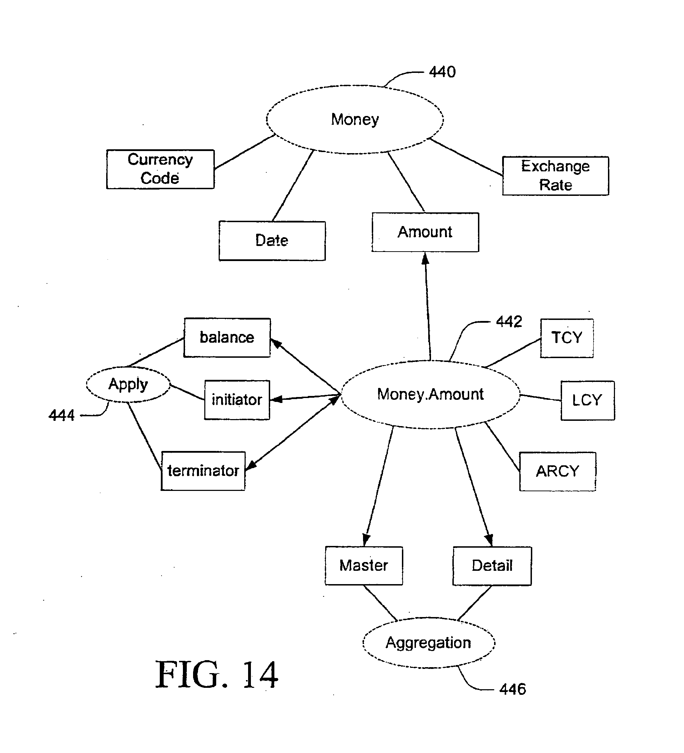

FIG. 14 illustrates an environment where several collaborations interact together. A money collaboration 440, a money amount collaboration 442, an apply collaboration 444 and an aggregation collaboration 446 are illustrated. Money amount collaboration 442 uses values from money collaboration 440, apply collaboration 444 and aggregation collaboration 446 in order to calculate values for the business application. Also, money amount collaboration 442 is illustrated wherein the role amount in money collaboration 440 defines behavior for money amount collaboration 442.

By implementing collaborations and roles associated with business entities, general business logic is reusable in various situations. Roles are bound to instances of metadata such that upon an update of a property in a business object, the role performs business logic on the property. Accordingly, these instances of business logic need not be reproduced throughout a business application, saving time and money in development costs.

Although the present invention has been described with reference to particular embodiments, workers skilled in the art will recognize that changes may be made in form and detail without departing from the spirit and scope of the invention.

## Claims

1. A method for implementing business logic in a framework, comprising:
automatically intercepting an event associated with a business entity;
instantiating an implementation of business logic upon intercepting the event in order to calculate a result based on the event and the business logic; and
binding the result to a property within the framework.

2. The method of claim 1 and further comprising declaring the implementation of business logic to be associated with the business entity.

3. The method of claim 1-2 wherein the event is a creation of the business entity.

4. The method of claim 1-2 wherein the event is an update of the business entity.

5. The method of claim 1-2 wherein the event includes reading the business entity.

6. The method of claim 1-2 wherein the event is a deletion of the business entity.

7. The method of claim 1-2 wherein the business entity includes a business entity property and wherein the event is changing the business entity property.

8. The method of claim 1-7 wherein the business entity includes the property.

9. The method of claim 1-7 wherein a second business entity includes the property.

10. A computer readable medium adapted to perform the method of any of claims 1-9.

11. A system for managing and storing information, comprising:
a business entity module including a property associated with stored information; and
a collaboration module associated with the business entity module and including a role associated with the property and configured to implement business logic upon an event of the associated business entity to calculate a result based on the event in the business logic.

12. The system of claim 11 wherein the role further includes information for binding the role to the property.

13. The system of claim 11-12 wherein the business entity module is separate from the collaboration module.

14. The system of claim 11-13 and further comprising a second business entity module including a property and configured to instantiate the collaboration module to associate the role with the property.

15. The system of claim 11-14 wherein the event is a creation of the business entity module.

16. The system of claim 11-14 wherein the event is an update of the business entity module.

17. The system of claim 11-14 wherein the event includes reading the business entity module.

18. The system of claim 11-14 wherein the event is changing the property.

19. The system of claim 11-18 wherein the collaboration module is further configured to bind the results to the property.

20. The system of claim 11-19 wherein the collaboration module is further configured to bind the results to a second property.

21. The system of claim 20 wherein the second property is included in the business entity module.

22. The system of claim 20 wherein the second property is included within a second business entity module.
